# EUROPEAN PATENT APPLICATION

(11) **EP 2 781 395 A1**
(43) Date of publication of application: **24.09.2014**
(21) Application number: 13305348.8
(22) Date of filing: 21.03.2013
(51) Int. Cl.: B60L 11/18, H01R 13/00

(54) **Cable connector and connector assembly process**

(71) Applicant: Delphi International Operations Luxembourg S.à r.l., 4940 Bascharage (LU)
(72) Inventor: Perot, Aymeric, 28230 Epernon (FR)
(74) Representative: Robert, Vincent

(57) **Abstract**

The invention relates to cable connectors for hybrid and / or electric vehicles. The inventive connector has a connector housing with a cable outlet and a cable sleeve (326) for protecting and guiding a cable (500) through the cable outlet. The sleeve (326) comprises two grooves (328, 330): one which is engaged with a housing rim (324) for retaining the sleeve (326) on the housing and the other one for attaching a strap (342) linked to a cap (340), for retaining the cap (340) attached to the housing.

## Description

### Field of the invention

The invention relates to the field of cable connectors. For instance, the invention relates to high-voltage plug connectors for vehicles, such as plug connectors for supplying power to electric vehicles.

### Background of the invention

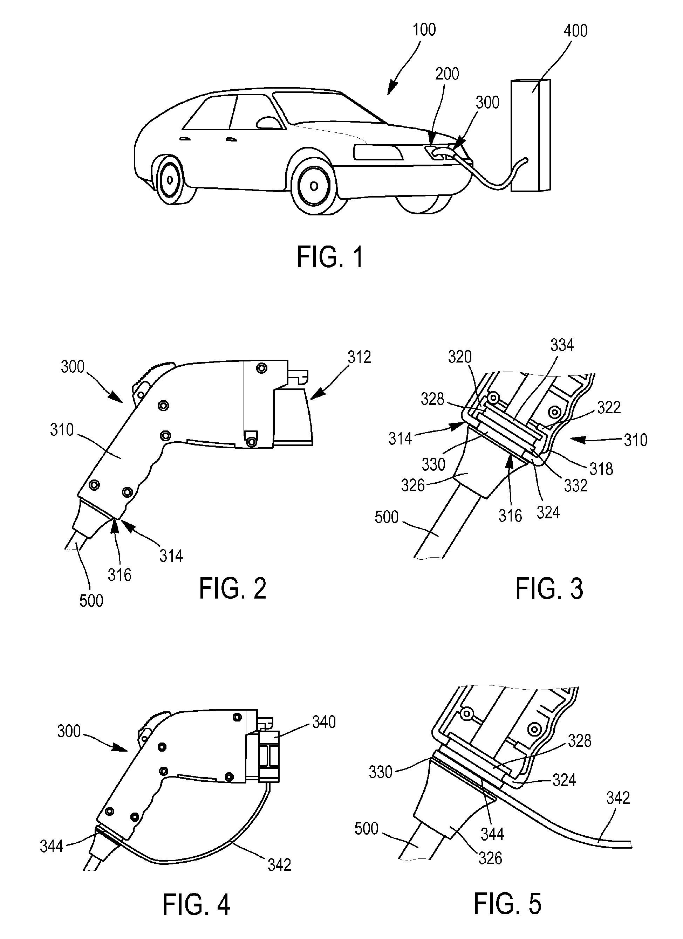

For the sake of example, the background of the invention is taken in the field of plug connectors for charging electric vehicle. As schematically shown on Fig. 1, electric vehicles 100 may comprise a socket connector 200 in which a plug connector 300 is mated for charging a battery set with power supplied by an electric charge station 400.

For covering and protecting the mating interface and the terminals of this kind of plug connectors while not mated in a socket connector, a removable cap may be provided. As described by USD664099, such a removable cap may be linked to the housing with a strap. For this prior art connector, the strap is short and the cap may become cumbersome when there is not much room in the environment around the socket connector.

An aim of the invention is to mitigate at least this drawback.

### Summary of the invention

To this aim, according to the invention, a cable connector is provided which have a housing with a cable outlet.

More particularly, the cable connector is advantageously a plug connector comprising a housing with a mating interface and which accommodates terminals. The terminals are then designed to be connected through the mating interface to a counterpart connector. A cable portion with wires is mounted in the housing, the wires being attached to the terminals. The cable portion sticks out of the housing by the outlet around which a rim at least partially extends. When the housing is complete and close the outlet may be a substantially round opening. The rim forms a rib which extends radially towards the opening center.

A cable sleeve is mounted in the opening for protecting and guiding the cable through the cable outlet. This sleeve comprises a first groove in which is engaged the rim for retaining the sleeve on the housing,

Further, according to the invention, the cable sleeve comprises a second groove, similar to the first groove, so that the rim can be engaged either in the first groove or the second groove, for retaining the sleeve on the housing.

Since the sleeve has a first and a second grooves, it becomes possible to use one of these grooves for engaging the outlet rim and the other for optionally attaching the strap of a cap. The sleeve being at the opposite of the connector housing with regard to the mating interface, the strap is longer than in prior art connectors, thought maintained on the connector. This has the advantage of freeing the environment in the part of the housing close to the mating interface. This also has the advantage of maintaining the cap attached to the housing and of avoiding the strap to slip along the cable.

If the connector is intended to be used without cap, the sleeve is mounted in the connector housing so as to engage the rim in the second groove. Then, the first groove is hidden in the housing so as to improve the connector look.

If the connector is intended to be used with a cap, the rim is engaged in the first groove and the strap is provided with a loop engaged in the second groove.

Consequently, the connector according to the invention is more versatile that those of the prior art. Be the connector used with or without cap, the connector parts remain the same (except the cap and its strap).

According to another aspect, the invention is a connector assembly process for mounting a cable sleeve on the connector according to the invention.

Other features and advantages of the invention will be set forth in, or apparent from, the following description and of the appending drawings.

### Brief description of the drawings

On the drawings:
- Figure 1 schematically represents a vehicle connected to an electric charge station with an example of cable connector;
- Figure 2 schematically represents a cable connector according to the invention, without cap;
- Figure 3 schematically represents the cable connector of Figure 2 with a part of its housing removed for showing how is the sleeve mounted in it;
- Figure 4 schematically represents a cable connector according to the invention, with a cap; and
- Figure 5 schematically represents the cable connector of Figure 4 with a part of its housing removed for showing how is the sleeve mounted in it.

On the different figures, the same references signs designate like or similar elements.

### Detailed description

The invention is illustrated with an example of cable connector taken in the field of high voltage plug connectors for vehicles, such as plug connectors for supplying power to electric vehicles. But, the invention can find applications in other kind of cable connectors.

In the example illustrated on Fig. 2, the cable connector 300 according to the invention comprises a housing 310 to which a cable 500 is mounted. It has a mating interface 312, to be mated in a socket connector 200, and a rear end section 314 with a cable outlet 316 through which the cable 500 sticks out of the housing 310.

As best shown on Fig. 3, the housing 310 has a first housing portion 318 (it also has a second housing portion which is removed, substantially symmetrical to the first housing portion 318). The first and second housing portions are made of plastics (but according to variants, the housing may be made other materials).

The rear end section 314 comprises an annular groove 320 (only half of this groove is shown on figure 3, since the second housing portion is missing). This annular groove 320 circularly extends around the cable outlet 316 and is delimited along the cable direction by an internal rim 322 and an external rim 324. In the embodiment here-described, the internal rim 322 and external rim 324 extend all around the cable outlet 316 (but according to variants, the internal rim 322 and external rim 324 may extend only partially around the outlet 316). The internal 322 and external 324 rims form ribs which extends radially towards the cable 500.

In the rear end section 314, a sleeve 326 is mounted. This sleeve 326 has a substantially tapered shape, with a first 328 and a second 330 annular grooves at its base. An intermediate annular rib 332 separates the first 328 and second 330 annular grooves. Another rib 334 is located on the other side of the first groove 328 with regard to intermediate annular rib 332. The first 328 and second 330 grooves are similar. Then the external rim 324 can be engaged either in the first groove 328 or the second groove 330.

As shown on figures 4 and 5, a cap 340 can be mounted on the connector 300. This cap 340 may be of any shape which covers and protects the mating interface 312. The cap 340 comprises a strap 342 having two ends, one end linked to the cap 340 and the other end having a loop 344.

According to the invention, the process for mounting the cable sleeve 326 on the connector 300 comprises the steps of:
- providing the above-described housing 310,
- providing the above-described cable sleeve 326 for protecting and guiding the cable through the cable outlet 316, and
- mounting the sleeve 326 on the housing, so as to engage the external rim 324 either in the first groove 328 (see figures 2 and 3) or the second groove 330 (see figures 4 and 5), depending on whether a cap 340 and a strap 342 are mounted on the connector.

When a cap 340 is mounted on the connector 300, the loop 344 is engaged in the second groove 330 for retaining the cap 340 attached to the housing 310, prior to engaging the external rim 324 with the first groove 328.

## Claims

1. Cable connector comprising
- a housing (310) with a cable outlet (316) around which a rim (324) at least partially extends, and
- a cable sleeve (326) for protecting and guiding a cable (500) through the cable outlet (316), the cable sleeve (326) comprising a first groove (328) in which is engaged the rim (324) for retaining the sleeve (326) on the housing (310),
**characterized in that** the cable sleeve (326) comprises a second groove (330), similar to the first groove (328), so that the rim (324) can be engaged either in the first groove (328) or the second groove (330), for retaining the sleeve (326) on the housing (310).

2. Cable connector according to claim 1, comprising a strap (342) linked to a connector cap (340), engaged in one of the first (328) and second (330) grooves for retaining the cap (340) attached to the housing (310).

3. Cable connector according to claim 2, wherein the rim (324) is engaged in the first groove (328) and the strap (342) has a loop (344) engaged in the second groove (330).

4. Connector assembly process for mounting a cable sleeve (326) on the connector (300) according to one of the preceding claims, comprising the steps of :
- providing a housing (310) with a cable outlet (316) around which a rim (324) at least partially extend,
- providing a cable sleeve (326) for protecting and guiding a cable (500) through the cable outlet (316), the cable sleeve (326) comprising a first groove (328) in which is engaged the rim (324) for retaining the sleeve (326) on the housing (310),
**characterized in that**
- the cable sleeve (326) comprises a second groove (330), similar to the first groove (328), so that the rim (324) can be engaged either in the first groove (328) or the second groove (330), and **in that**
- the process comprises the step of mounting the sleeve (326) on the housing (310), so as to engage the rim (324) either in the first groove (328) or the second groove (330).

5. Process according to claim 4, further comprising the steps of
- providing a strap (342) having two ends, one end linked to a connector cap (340) and the other end having a loop (344), and
- engaging the loop (344) in the second groove (330) for retaining the cap (340) attached to the housing (310).

6. Process according to claim 5, comprising a step of engaging the loop (344) in the second groove (330) prior to engaging the first rim (324) with the first groove (328).
